# EUROPÄISCHE PATENTSCHRIFT

(11) **EP 2 855 206 B1**
(45) Veröffentlichungstag und Bekanntmachung des Hinweises auf die Patenterteilung: **13.04.2016**
(21) Anmeldenummer: 13728315.6
(22) Anmeldetag: 25.05.2013
(51) Int. Cl.: B60Q 3/02

(54) **VERFAHREN UND VORRICHTUNG ZUR INDIVIDUALISIERUNG EINES KRAFTFAHRZEUGINNENRAUMS**
METHOD AND DEVICE FOR INDIVIDUALIZING A MOTOR VEHICLE INTERIOR
PROCÉDÉ ET DISPOSITIF D'INDIVIDUALISATION DE L'HABITACLE D'UN VÉHICULE AUTOMOBILE

(30) Priorität: 01.06.2012 DE 102012010890
(43) Veröffentlichungstag der Anmeldung: 08.04.2015
(73) Patentinhaber: Audi AG, 85045 Ingolstadt (DE)
(72) Erfinder: MAYER, Michael, 85051 Ingolstadt (DE)
(74) Vertreter: Lehle, Josef
(86) Internationale Anmeldenummer: PCT/EP2013/001550
(87) Internationale Veröffentlichungsnummer: WO 2013/178345

(56) Entgegenhaltungen:
- EP-A1- 1 884 408
- WO-A1-2009/089109
- DE-A1-102010 003 273
- DE-A1-102011 013 777
- GB-A- 2 429 747
- US-A1- 2009 051 294
- US-B1- 6 536 928

## Beschreibung

Die Erfindung betrifft ein Verfahren zur Individualisierung eines Innenraums eines Kraftfahrzeugs nach dem Oberbegriff des unabhängigen Anspruchs 1 sowie eine Beleuchtungseinrichtung eines Kraftfahrzeugs nach dem Oberbegriff des unabhängigen Anspruchs 4.

Fahrzeuge weisen zunächst eine sogenannte statische Innenraumbeleuchtung auf, bei der ein Öffnen oder Schließen bzw. Ent- oder Verriegeln einer Fahrzeugtür die Innenraumbeleuchtung ein- bzw. ausschaltbar ist. Modernere Varianten von Innenraumbeleuchtungen weisen einen Dimmer auf, durch den die Beleuchtung ein- und ausdimmbar ist. Eine Kombination aus Dimmer und der Möglichkeit, die Beleuchtung bei einem Fernentriegeln des Fahrzeugs einzuschalten, erzeugt beim Benutzer ein angenehmes Erscheinungsbild. Dieses Erscheinungsbild kann zusätzlich dadurch verbessert werden, dass farbige Leuchtmittel vorgesehen sind, die ein angenehmeres Licht, insbesondere wärmeres Licht, erzeugen.

Auch mit den farbigen Leuchtmitteln ist nur eine recht einseitige Beleuchtung des Fahrzeuginnenraums möglich, da die Beleuchtung voreingestellt ist und lediglich in Abhängigkeit des Entriegelns und Verriegelns des Fahrzeugs betätigt wird.

Die DE 10 2008 064 265 A1 offenbart ein Verfahren zum Ansteuern einer Anzeigeeinheit in einem Fahrzeug, bei welchem die Farben der Hintergrundbeleuchtung der Anzeigeeinheit in Abhängigkeit erfasster Eingangssignale geändert wird.

Die DE 11 2007 003 262 T5 offenbart, dass ein gesteuerter Lichtstrahl im Fahrzeuginneren situationsabhängig unterschiedliche, spezifische Positionen, insbesondere Bedienelemente, beleuchten kann und so eine Informationsanzeigevorrichtung darstellt.

Die DE 696 20 705 T2 offenbart, dass es für eine Kraftfahrzeuginnenraumbeleuchtung zweckmäßig ist, dimmbar zu sein und in Abhängigkeit fahrzeugabhängiger Parameter unterschiedliche Helligkeitsstufen aufzuweisen.

Ein gattungsgemäßes Verfahren zur Individualisierung eines Innenraumes eines Kraftfahrzeugs sowie eine gattungsgemäße Beleuchtungseinrichtung eines Kraftfahrzeugs sind aus dem WO 2009/089109 A1 bekannt.

Es ist deshalb eine Aufgabe der vorliegenden Erfindung, ein Verfahren zur Individualisierung der Beleuchtung eines Innenraums vorzuschlagen. Darüber hinaus ist es eine Aufgabe der Erfindung, eine Vorrichtung für das Verfahren bereitzustellen.

Ein Verfahren zur Lösung der erfinderischen Aufgabe weist die Merkmale des unabhängigen Anspruchs 1 auf. Danach wird die Aufgabe durch ein Verfahren zur Individualisierung eines Kraftfahrzeuginnenraums durch die Beleuchtung des Ambientes gelöst, wobei die Beleuchtung aus einer Anzahl unterschiedlicher Beleuchtungsszenarien, für welche die Beleuchtung wenigstens in ihrer Lichtfarbe, Helligkeit oder Intensität eingestellt wird, ausgewählt wird, wobei wenigstens ein Beleuchtungsszenario in Abhängigkeit wenigstens eines fahrzeugunabhängigen Parameters ausgewählt wird, und wobei die Beleuchtungseinrichtung zum Kreieren eines neuen Beleuchtungsszenarios durch einen Nutzer des Kraftfahrzeugs mittels eines Eingabegerätes manipuliert wird, mittels welchem durch den Nutzer einerseits die Beleuchtung in zumindest ihrer Lichtfarbe, Helligkeit oder Intensität und andererseits der Parameter, bei dem es sich um eine Uhrzeit und/oder eine Jahreszeit und/oder eine Tageszeit und/oder Witterungsbedingungen, in denen das Kraftfahrzeug sich befindet, und/oder eine Außen- oder Innentemperatur handelt und in dessen Abhängigkeit die Beleuchtung wenigstens in ihrer Lichtfarbe, Helligkeit oder Intensität eingestellt wird, änderbar ist. Die Individualisierung des Fahrzeugs kann zwar im Vorfeld festgelegt sein, beim Ein- und Ausschalten der Beleuchtung wird aber das Beleuchtungsszenario von Parametern bestimmt, die unabhängig von dem Fahrzeug sind. Damit ergibt sich eine sehr viel größere Auswahl an Möglichkeiten, das Fahrzeug lichttechnisch zu individualisieren.

Nach einer bevorzugten Ausführungsform kann bei einem Verriegeln oder Entriegeln des Kraftfahrzeugs der Parameter festgestellt werden und das entsprechende Beleuchtungsszenario ausgewählt und der Innenraum beleuchtet werden. Damit ist die Innenraumbeleuchtung nicht nur von dem Aufund Zuschließen des Fahrzeugs abhängig, sondern auch von weiteren Parametern, durch die Individualisierung weiter gesteigert werden kann.

Damit bietet das Verfahren eine große Anzahl an Möglichkeiten, die Beleuchtung nach den Wünschen oder Vorstellungen des Benutzers des Kraftfahrzeugs einzustellen. Damit sind vielfältige Beleuchtungsszenarien einstellbar. Weiterhin kann vorgesehen sein, dass die Beleuchtung ein- und ausgedimmt werden kann. Hierdurch können insbesondere in der Anfangsphase des Ein- und Ausschaltens der Beleuchtung unterschiedliche Beleuchtungsszenarien dargestellt werden.

Nach einem weiteren Aspekt der Erfindung wird die erfinderische Aufgabe durch eine Beleuchtungseinrichtung mit den Merkmalen des unabhängigen Anspruchs 4 gelöst. Danach wird eine Beleuchtungseinrichtung eines Kraftfahrzeugs vorgeschlagen, die wenigstens ein farbiges Leuchtmittel in einem Innenraum des Kraftfahrzeugs aufweist, wobei bei einem Verriegeln oder Entriegeln des Fahrzeugs das Leuchtmittel ein- bzw. ausschaltbar ist, und wobei durch das Leuchtmittel wenigstens ein Beleuchtungsszenario, für welches das wenigstens eine Leuchtmittel wenigstens in seiner Lichtfarbe, Helligkeit oder Intensität eingestellt wird, in dem Innenraum darstellbar ist, und wobei die Beleuchtungseinrichtung zum Kreieren eines neuen Beleuchtungsszenarios durch einen Nutzer des Kraftfahrzeugs mittels eines Eingabegerätes manipulierbar ist, wobei mittels des Eingabegeräts durch den Nutzer einerseits das Leuchtmittel in wenigstens seiner Lichtfarbe, Helligkeit oder Intensität und andererseits der Parameter, bei dem es sich um eine Uhrzeit und/oder eine Jahreszeit und/oder eine Tageszeit und/oder Witterungsbedingungen, in denen das Kraftfahrzeug sich befindet, und/oder eine Außen- oder Innentemperatur handelt und in dessen Abhängigkeit das Leuchtmittel wenigstens in seiner Lichtfarbe, Helligkeit oder Intensität eingestellt wird, änderbar ist. Mit der Beleuchtungseinrichtung ist es möglich, die vielfältigen Möglichkeiten, die durch das Leuchtmittel in dem Innenraum vorhandenen Leuchtmittel gegeben sind, auszuschöpfen.

Nach einem bevorzugten Ausführungsbeispiel der Erfindung kann das Beleuchtungsszenario in Abhängigkeit eines fahrzeugunabhängigen Parameters auswählbar sein. Damit ist die Innenraumbeleuchtung nicht nur mehr abhängig vom Verriegeln und Entriegeln des Fahrzeugs, sondern auch von außen auf das Fahrzeug einwirkende Bedingungen, die zur Darstellung unterschiedlicher Beleuchtungsszenarien heranziehbar sind.

Es ist vorgesehen, dass ein fahrzeugunabhängiger Parameter die Zeit, insbesondere ein Datum, eine Uhrzeit oder Jahreszeit, Witterungsbedingungen, in dem sich das Kraftfahrzeug befindet, eine Außen- oder Innentemperatur, Niederschlag, Sonne, Wolken oder dergleichen ist. So kann beispielsweise am Morgen, beim Aufschließen des Fahrzeugs ein anderes Beleuchtungsszenario in dem Innenraum des Fahrzeugs dargestellt werden, als ein für den Abend vorgesehenes Beleuchtungsszenario. Auch können die Beleuchtungsszenarien sich im Winter oder Sommer oder auch im Tagesverlauf ändern.

Vor allem kann nach einem weiteren bevorzugten Ausführungsbeispiel vorgesehen sein, dass beim Verriegeln und/oder Entriegeln jeweils unterschiedliche Beleuchtungsszenarien für das Leuchtmittel darstellbar sind. Insbesondere beim Herantreten an das Auto, wenn über eine Funkfernsteuerung das Auto bereits entriegelt ist, wünscht ein Fahrer sich ein entsprechendes Ambiente, weshalb gerade beim Entriegeln des Fahrzeugs unterschiedliche Beleuchtungsszenarien vorgesehen sind. So kann aber auch beim Verriegeln, also beim Verlassen des Fahrzeugs, eine Beleuchtung vorgesehen sein, die dem Fahrer ein angenehmes Gefühl verleiht.

Weiterhin ist erfindungsgemäß die Beleuchtung in ihrer Lichtfarbe, Helligkeit, Intensität oder dergleichen einstellbar. Das Leuchtmittel ist in der Lage, unterschiedliche Farben darzustellen, wodurch sich die unterschiedlichen Szenarien ergeben können. Darüber hinaus ist es für ein angenehmes Ambiente ebenso wichtig, auch die Helligkeit bzw. die Intensität der Beleuchtung einzustellen, wodurch sich für den Fahrer ein angenehmes Gefühl ergibt.

Deshalb ist es vorteilhaft vorgesehen, wenn das Leuchtmittel LED, RGB-LED oder OLED oder dergleichen aufweist, wobei insbesondere das Leuchtmittel ein- und ausdimmbar ist. Die genannten Leuchtmittel sind einerseits energieeffizient und andererseits individuell einsetzbar und verbaubar, wobei durch eine Mehrzahl der genannten Leuchtmittel ganz unterschiedliche Beleuchtungsszenarien darstellbar sind. Bei mehr als nur einem Leuchtmittel sind die Leuchtmittel individuell ansteuerbar.

Gemäß einer Weiterbildung der vorliegenden Erfindung können mehrere Beleuchtungsszenarien gespeichert sein. Die Speicherung verschiedener Beleuchtungsszenarien erfolgt von Werksseite, so dass der Fahrer sich aus den unterschiedlichen Szenarien eines oder mehrere für eine entsprechende Situation aussuchen kann. Darüber hinaus kann er aber auch mittels eines Eingabegerätes die Beleuchtungseinrichtung derart manipulieren, dass er sein eigenes Beleuchtungsszenario für eine entsprechende Situation kreiert.

Ein bevorzugtes Ausführungsbeispiel wird nachfolgend anhand der Zeichnung näher erläutert. Darin zeigt:

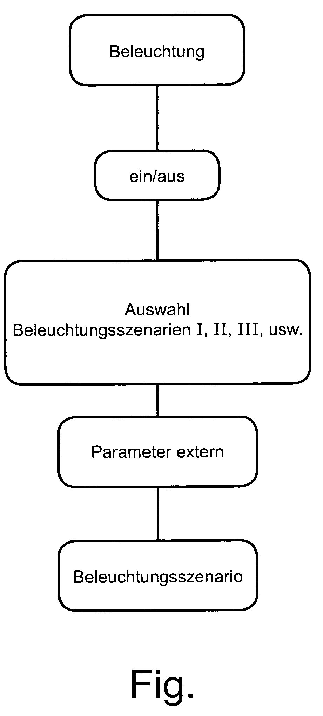

- Fig. 1: eine Skizze eines Verfahrensablaufs nach einem Ausführungsbeispiel

Zur Individualisierung eines Fahrzeuges, insbesondere eines Fahrzeuginnenraums, steht einem Nutzer eine Beleuchtungseinrichtung zur Verfügung, die ein oder mehrere Leuchtmittel aufweist. Die in dem Innenraum angeordneten Leuchtmittel sind LED, RGB-LED oder OLED, die in entsprechenden Bereichen des Innenraums vorgesehen sind. Eine große Vielzahl an Leuchtmitteln ist für die Erfindung vorteilhaft, da dadurch sich mehr Möglichkeiten zur Individualisierung des Fahrzeuginnenraums ergeben. Die Leuchtmittel sind hinsichtlich ihrer Lichtfarbe, Helligkeit, Intensität oder dergleichen einstellbar, wobei jedes Leuchtmittel oder zumindest eine Gruppe von Leuchtmitteln, individuell ansteuerbar ist. Somit können nebeneinander angeordnete LED Unterschiede in ihrer Helligkeit und Farbgebung aufweisen.

Durch die Vielzahl an individuell ansteuerbaren Leuchtmitteln sind Beleuchtungsszenarien im Innenraum des Fahrzeugs möglich, die den Fahrer bzw. Nutzer eine Individualisierung erlauben. Die Szenarien können sich nach den unterschiedlichen Stimmungen des Nutzers richten. Dabei kann beispielsweise am Morgen beim Einsteigen in den Wagen die Beleuchtung einen Sonnenaufgang nachstellen und am Abend einen Sonnenuntergang. Darüber hinaus sind auch Beleuchtungsszenarien denkbar, die auf den Fahrer beruhigend oder erfrischend einwirken können.

Die Auswahl eines Beleuchtungsszenarios ist abhängig von fahrzeugunabhängigen Parametern. Fahrzeugunabhängige Parameter sind beispielsweise die Zeit in Form der Uhrzeit, Jahreszeit, Tageszeit oder dergleichen. Ferner kann ein solcher fahrzeugunabhängiger Parameter auch eine Umgebung des Fahrzeugs betreffen, weshalb beispielsweise bei Regen eine andere Beleuchtung ausgewählt wird als bei Sonnenschein. Im Allgemeinen können Witterungsbedingungen zur Auswahl einer entsprechenden Beleuchtung herangezogen werden. Somit ist auch eine Außentemperatur ein für die Beleuchtung vorgesehenes Auswahlkriterium.

Die unterschiedlichen Beleuchtungsszenarien können von Herstellerseite aus vorgegeben sein, wie beispielsweise der Sonnenaufgang oder der Sonnenuntergang beim Entriegeln am Morgen und Verriegeln am Abend. Auch können sich im Allgemeinen die Lichtfarben der Beleuchtungsmittel abhängig von der Jahreszeit ändern, wodurch beispielsweise im Winter ein eher weißliches Licht gewählt wird, im Frühling ein grünliches, im Sommer ein gelbliches und im Herbst ein rötliches. Die von dem Hersteller vorgesehenen Szenarien, die darüber hinaus in Abhängigkeit der voreingestellten Parameter ausgewählt werden, können von dem Nutzer geändert werden. Hierzu kann einerseits der Nutzer die Kriterien ändern bzw. auswählen, zu denen die Beleuchtungsszenarien auszuwählen sind und andererseits kann er auch die Qualität der Beleuchtung ändern, indem beispielsweise ein Sonnenuntergang rötlicher oder gelber eingestellt wird, als das, das von Herstellerseite aus voreingestellt ist. Die Möglichkeit zur Variation der Beleuchtung einerseits und der Parameter andererseits ist vom Nutzer frei einstellbar. Darüber hinaus kann der Nutzer auch selber Beleuchtungsszenarien konfigurieren, die entsprechend der zur Verfügung stehenden Parameter ausgewählt werden.

In einem anderen Ausführungsbeispiel können die Beleuchtungsszenarien zusätzlich zu den fahrzeugunabhängigen Parametern auch in Abhängigkeit von fahrzeugabhängigen Parametern ausgewählt werden. Dazu kann beispielsweise eine Beleuchtung in Abhängigkeit einer Geschwindigkeit des Fahrzeugs zusammen mit der Helligkeit aus fahrzeugunabhängigen Parametern ausgewählt werden.

## Patentansprüche

1. Verfahren zur Individualisierung eines Innenraums eines Kraftfahrzeugs, bei dem der Innenraum mittels einer Beleuchtungseinrichtung beleuchtet wird, wobei die Beleuchtung aus einer Anzahl unterschiedlicher Beleuchtungsszenarien, für welche die Beleuchtung wenigstens in ihrer Lichtfarbe, Helligkeit oder Intensität eingestellt wird, ausgewählt wird, wobei wenigstens ein Beleuchtungsszenario in Abhängigkeit wenigstens eines fahrzeugunabhängigen Parameters ausgewählt wird, **dadurch gekennzeichnet, dass** die Beleuchtungseinrichtung zum Kreieren eines neuen Beleuchtungsszenarios durch einen Nutzer des Kraftfahrzeugs mittels eines Eingabegerätes manipuliert wird, mittels welchem durch den Nutzer einerseits die Beleuchtung in zumindest ihrer Lichtfarbe, Helligkeit oder Intensität und andererseits der Parameter, bei dem es sich um eine Uhrzeit und/oder eine Jahreszeit und/oder eine Tageszeit und/oder Witterungsbedingungen, in denen das Kraftfahrzeug sich befindet, und/oder eine Außen- oder Innentemperatur handelt und in dessen Abhängigkeit die Beleuchtung wenigstens in ihrer Lichtfarbe, Helligkeit oder Intensität eingestellt wird, änderbar ist.

2. Verfahren nach Anspruch 1, **dadurch gekennzeichnet, dass** bei einem Verriegeln oder Entriegeln des Kraftfahrzeugs der Parameter festgestellt und das entsprechende Beleuchtungsszenario ausgewählt und der Innenraum beleuchtet wird.

3. Verfahren nach wenigstens einem der vorstehenden Ansprüche, **dadurch gekennzeichnet, dass** die Beleuchtung ein- und ausgedimmt wird.

4. Beleuchtungseinrichtung eines Kraftfahrzeugs, die wenigstens ein farbiges Leuchtmittel in einem Innenraum des Kraftfahrzeugs aufweist, wobei bei einem Verriegeln oder Entriegeln des Fahrzeugs das Leuchtmittel ein- bzw. ausschaltbar ist, wobei durch das Leuchtmittel wenigstens ein Beleuchtungsszenario, für welches das wenigstens eine Leuchtmittel wenigstens in seiner Lichtfarbe, Helligkeit oder Intensität eingestellt wird, in dem Innenraum darstellbar ist, **dadurch gekennzeichnet, dass** die Beleuchtungseinrichtung zum Kreieren eines neuen Beleuchtungsszenarios durch einen Nutzer des Kraftfahrzeugs mittels eines Eingabegerätes manipulierbar ist, wobei mittels des Eingabegeräts durch den Nutzer einerseits das Leuchtmittel in wenigstens seiner Lichtfarbe, Helligkeit oder Intensität und andererseits der Parameter, bei dem es sich um eine Uhrzeit und/oder eine Jahreszeit und/oder eine Tageszeit und/oder Witterungsbedingungen, in denen das Kraftfahrzeug sich befindet, und/oder eine Außen- oder Innentemperatur handelt und in dessen Abhängigkeit das Leuchtmittel wenigstens in seiner Lichtfarbe, Helligkeit oder Intensität eingestellt wird, änderbar ist.

5. Beleuchtungseinrichtung nach Anspruch 4, **dadurch gekennzeichnet, dass** das Beleuchtungsszenario in Abhängigkeit eines fahrzeugunabhängigen Parameters auswählbar ist.

6. Beleuchtungseinrichtung nach wenigstens einem der vorhergehenden Ansprüche 4 und 5, **dadurch gekennzeichnet, dass** beim Verriegeln und/oder Entriegeln jeweils unterschiedliche Beleuchtungsszenarien durch das Leuchtmittel darstellbar sind.

7. Beleuchtungseinrichtung nach wenigstens einem der vorhergehenden Ansprüche 4 bis 6, **dadurch gekennzeichnet, dass** das Leuchtmittel LED, RGB-LED, OLED oder dergleichen aufweist, wobei insbesondere das Leuchtmittel ein- und ausdimmbar ist.

8. Beleuchtungseinrichtung nach wenigstens einem der vorhergehenden Ansprüche 4 bis 7, **dadurch gekennzeichnet, dass** mehrere Beleuchtungsszenarien gespeichert sind.

## Claims

1. Method of individualising the interior of a motor vehicle in which the interior is illuminated by means of a lighting device, wherein the lighting is selected from a number of different illumination scenarios, for which the lighting is adjusted in terms of at least its colour, brightness or intensity, wherein at least one illumination scenario is selected as a function of at least one vehicle-independent parameter, **characterised in that** the lighting device is used by a user of the vehicle to create a new illumination scenario by means of an input device, by way of which the user can change on the one hand the lighting in terms of at least its colour, brightness or intensity and, on the other hand, the parameter, which can involve a time and/or a season and/or a time of day and/or weather conditions which the vehicle is in, and/or an external or internal temperature in dependence on which the lighting is adjusted at least in terms of its colour, brightness or intensity.

2. Method according to claim 1 **characterised in that** on locking and unlocking the motor vehicle the parameter is determined and the corresponding illumination scenario selected and the interior illuminated.

3. Method according to at least one of the preceding claims **characterised in that** the illumination is dimmed and undimmed.

4. Motor vehicle lighting device which has at least one coloured lighting means in an interior of the motor vehicle, wherein on locking or unlocking the motor vehicle the lighting means can be switched on and/or off, wherein through the lighting means at least one illumination scenario, for which the at least one lighting means is adjusted in terms of its colour, brightness or intensity, can be displayed in the interior, **characterised in that** in order to create a new illumination scenario the lighting device can be manipulated by a user of the motor vehicle by way of an input device, wherein by way of the input device the user can change on the one hand the lighting in terms of at least its colour, brightness or intensity and, on the other hand, the parameter, which can involve a time and/or a season and/or a time of day and/or weather conditions which the vehicle is in, and/or an external or internal temperature in dependence on which the lighting is adjusted at least in terms of its colour, brightness or intensity.

5. Lighting device according to claim 4 **characterised in that** the illumination scenario can be selected as a function of a vehicle-independent parameter.

6. Lighting device according to at least one of the preceding claims 4 and 5 **characterised in that** on locking and/or unlocking different illumination scenarios can be displayed by the lighting means.

7. Lighting device according to at least one of the preceding claims 4 to 6 **characterised in that** the lighting means has LEDs, RGB-LEDs, OLEDs or suchlike, wherein, more particularly, the lighting means can be dimmed and undimmed.

8. Lighting device according to at least one of the preceding claims 4 to 7 **characterised in that** several illumination scenarios are stored.

## Revendications

1. Procédé d'individualisation d'un espace intérieur d'un véhicule automobile, selon lequel l'espace intérieur est éclairé au moyen d'un dispositif d'éclairage, l'éclairage étant sélectionné parmi un certain nombre de scénarios d'éclairage différents pour lesquels l'éclairage est réglé au moins quant à sa couleur, sa luminosité ou son intensité, au moins un scénario d'éclairage étant sélectionné en fonction d'au moins un paramètre indépendant du véhicule, **caractérisé en ce que**, pour créer un nouveau scénario d'éclairage, le dispositif d'éclairage est manipulé par un utilisateur du véhicule automobile au moyen d'un appareil d'entrée au moyen duquel peuvent être modifiés par l'utilisateur d'une part l'éclairage au moins quant à sa couleur, sa luminosité ou son intensité et d'autre part le paramètre qui est une heure et/ou une saison et/ou un moment de la journée et/ou des conditions météorologiques dans lesquelles se trouve le véhicule automobile et/ou une température extérieure ou intérieure et en fonction duquel l'éclairage est réglé au moins quant à sa couleur, sa luminosité ou son intensité.

2. Procédé selon la revendication 1, **caractérisé en ce que**, lors d'un verrouillage ou déverrouillage du véhicule automobile, le paramètre est fixé, le scénario d'éclairage correspondant est sélectionné et l'espace intérieur est éclairé.

3. Procédé selon au moins l'une des revendications précédentes, **caractérisé en ce que** l'éclairage est allumé et éteint progressivement.

4. Dispositif d'éclairage d'un véhicule automobile qui comporte au moins un dispositif lumineux coloré dans un espace intérieur du véhicule automobile, le dispositif lumineux pouvant être activé ou désactivé lors d'un verrouillage ou déverrouillage du véhicule et au moins un scénario d'éclairage pour lequel l'au moins un dispositif lumineux est réglé au moins quant à sa couleur, sa luminosité ou son intensité pouvant être présenté par le dispositif lumineux dans l'espace intérieur, **caractérisé en ce que**, pour créer un nouveau scénario d'éclairage, le dispositif d'éclairage peut être manipulé par un utilisateur du véhicule automobile au moyen d'un appareil d'entrée au moyen duquel peuvent être modifiés par l'utilisateur d'une part le dispositif lumineux au moins quant à sa couleur, sa luminosité ou son intensité et d'autre part le paramètre qui est une heure et/ou une saison et/ou un moment de la journée et/ou des conditions météorologiques dans lesquelles se trouve le véhicule automobile et/ou une température extérieure ou intérieure et en fonction duquel le dispositif lumineux est réglé au moins quant à sa couleur, sa luminosité ou son intensité.

5. Dispositif d'éclairage selon la revendication 4, **caractérisé en ce que** le scénario d'éclairage peut être sélectionné en fonction d'un paramètre indépendant du véhicule.

6. Dispositif d'éclairage selon au moins l'une des revendications précédentes 4 ou 5, **caractérisé en ce que**, lors du verrouillage et/ou déverrouillage, des scénarios d'éclairage différents peuvent être présentés par le dispositif lumineux.

7. Dispositif d'éclairage selon au moins l'une des revendications précédentes 4 à 6, **caractérisé en ce que** le dispositif lumineux comporte des LEG, RGB-LED, OLED ou autres, le dispositif pouvant notamment être allumé et éteint progressivement.

8. Dispositif d'éclairage selon au moins l'une des revendications précédentes 4 à 7, **caractérisé en ce que** plusieurs scénarios d'éclairage sont mémorisés.
